Europäisches Patentamt

(19) European Patent Office

Office européen des brevets

(11) Numéro de publication: **0 076 207 B1**

(12) **FASCICULE DE BREVET EUROPEEN**

(45) Date de publication du fascicule du brevet:
26.02.86

(21) Numéro de dépôt: **82401730.5**

(22) Date de dépôt: **24.09.82**

(51) Int. Cl.⁴: **H 02 G 1/08**

(54) Câble pour fibres optiques destiné à être posé en conduite.

(30) Priorité: **29.09.81  FR 8118347**

(43) Date de publication de la demande:
**06.04.83 Bulletin 83/14**

(45) Mention de la délivrance du brevet:
**26.02.86 Bulletin 86/9**

(84) Etats contractants désignés:
**DE GB IT**

(56) Documents cités:
**EP - A - 0 017 616**
**CA - A - 990 374**
**CH - A - 273 799**
**DE - C - 819 702**
**DE - C - 937 172**
**FR - A - 1 593 816**
**FR - A - 2 234 482**
**GB - A - 478 517**
**US - A - 4 232 981**

**DERWENT PUBLICATIONS, 22 avril 1981, semaine D11,**
**section EL: Electrical., page 48, London (GB);**

(73) Titulaire: **LIGNES TELEGRAPHIQUES ET**
**TELEPHONIQUES L.T.T., 1, rue Charles Bourseul,**
**F-78702 Conflans-Ste-Honorine (FR)**

(72) Inventeur: **Boulogne, René, THOMSON-CSF**
**SCPI 173, Bld Haussmann, F-75379 Paris Cedex 08 (FR)**
Inventeur: **Fouque, Maurice, THOMSON-CSF**
**SCPI 173, Bld Haussmann, F-75379 Paris Cedex 08 (FR)**

(74) Mandataire: **Weinmiller, Jürgen et al, Zeppelinstrasse 63,**
**D-8000 München 80 (DE)**

LIBER, STOCKHOLM 1986

## Description

La présente invention a pour objet un câble et son procédé de pose en conduite.

On connait de l'art antérieur et en particulier des documents G3-A-475 157, US-A-4 232 981, EP-A-0 017 616 et EP-A- 0 060 173, diverses formes de câbles et divers procédés de tirage de ces câbles en conduite, mais ceux-ci ne permettent en général pas de dépasser des longueurs de tirage de l'ordre de quelques centaines de mètres et nécessitent un nombre de billes élevé pour la pose. La limitation est essentiellement dûe au frottement entre la paroi externe du câble et la paroi interne de la conduite, et on s'est constamment efforcé de l'abaisser, afin d'augmenter, à effort de traction égal, la longueur possible de tirage.

D'autre part, les câbles à fibres optiques demandent en général à être posés sur des longueurs aussi grandes que possible afin de limiter le nombre des épissures qui sont d'une part délicates à réaliser et provoquent d'autre part un affaiblissement du signal lumineux à transmettre.

La présente invention a pour objet un câble, notamment à fibres optiques, de structure améliorée, de manière à faciliter les opérations de pose et à augmenter si nécessaire les longueurs de tirage. Elle se rapporte donc à un câble pour fibres optiques destiné à ètre posé par tirage dans une conduite, ledit câble comportant une âme comportant au moins une fibre optique et étant pourvu d'une gaine extérieure comportant une pluralité de nervures longitudinales , ledit câble étant caractérisé en ce que lesdites nervures sont de forme triangulaire et sont de forme et dimensions permettant, lors de la pose du câble par tirage le long d'une conduite, d'intercaler des billes entre le câble et la conduite, de telle sorte que le câble ne repose que sur les billes, chacune de celles-ci étant alors encastrée dans une desdites nervures.

L'invention sera mieux comprise dans la description qui va suivre, donnée à titre d'exemple non limitatif, en se reportant aux dessins ci-annexés où :

- la figure 1 représente, en coupe, un câble selon l'invention dans une conduite,
- la figure 2 illustre un procédé de pose en conduite suivant l'invention, avec interposition de billes,
- les figures 3 à 6 repréentent des variantes de forme des nervures.

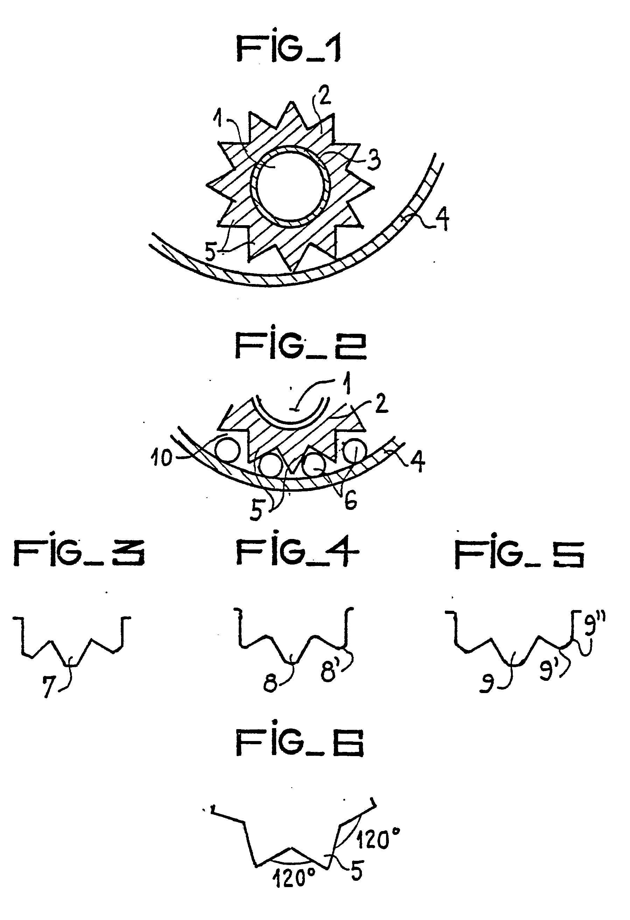

La figure 1 représente un câble comportant une âme 1 entourée d'une ou plusieurs gaines, dont une gaine extérieure 2 nervurée, par exemple comportant 12 nervures longitudinales. Le câble peut également comporter une enveloppe métallique 3. L'enveloppe métallique concourt par sa rigidité à protéger les circuits constituant l'âme 1 du câble contre les efforts de tractions. Dans le cas de câbles à fibres optiques, les fibres sont généralement assemblées sous la forme d'éléments de câbles pourvus chacun d'un élément de traction destiné également à protéger les fibres conte les efforts de traction auxquels pourraient être soumis les éléments de câble.

La gaine extérieure 2 est pourvue d'au moins une nervure longitudinale, hélico%56dale ou à pas alterné. Il est préférable de mettre en oeuvre une pluralité de nervures, avantageusement longitudinale. Une gaine nervurée permet de diminuer la surface de contact entre le câble et la conduite 4 le long de laquelle il doit être posé, et de diminuer par conséquent la surface de frottement. Le coefficient de frottement peut être également amélioré par lubrification du câble et/ou de la conduite d'une manière connue en soi, par exemple par graissage de la conduite 4 et/ou du câble. Qu'il y ait ou non lubrificationj la pose en conduite du câble a lieu par tirage le long de la conduite, en mettant à profit donc la réduction des forces de frottement entre le câble et la conduite, dû à la diminution de la surface de frottement.

Selon la variante de la figure 2, la pose en conduite du câble a lieu avec interposition de billes 6 le long de la conduite. Cette interposition peut être réalisée préalablement, et/ou au fur et à mesure pendant le déroulement du câble. Etant donné que le câble va se déplacer le long de la conduite 4 par roulement sur les billes, celles-ci vont être entrainées lors du déroulement du câble. si les billes ont été disposées préalablement dans la conduite, elles vont être entrainées progressivement et il faudra renouveler celles-ci au niveau de l'extrémité où le câble est introduit de manière à maintenir des billes en permanence sur tout le parcours du câble. Un certain nombre de billes sera récupéré à l'extremite débouchant de la conduite.

Il apparaît que le câble selon l'invention donne des r51sultats particulièrement intéressants lors de sa pose si on met en oeuvre des billes. D'une part, les rainures 10 présentes entre les nervures canalisent les billes et contribuent à empêcher que celles-ci ne viennent causer des bourrages, notamment dans les coudes des conduites, d'autre part les billes produisent un déplacement par roulement qui est plus mécanique qu'un déplacement par frottement et contribue donc à abaisser substantiellement la force de tiragej et enfin dans les zones où il est difficile d'assurer la présence de billes (par exemple les coudes ascendants), les nervures assurent un déplacement à frottement réduit.

Pour obtenir un bon guidage des billes, il est préférable d'utiliser un câble nervuré longitudinalement.

Pour obtenir dans les meilleures conditions l'effet de canalisation des billes par les rainures 10, il est avantageux de mettre en oeuvre des billes de diamètre légèrement supérieur à la dimension des rainures, de telle sorte que le càble ne repose qùe sur les billes 6. C'est cette configuration qui est représentée à la figure 2.

A titre d'exemple, un diametre de billes de l'ordre de 2 mm donne de bons résultats pour un câble à fibres optiques de diamètre extérieur de 25 mm pourvu de 12 nervures définissant des rainures de profondeur 1,5 mm et de largeur maximale 6 mm.

Dans tous les cas de figures, les billes seront avantageusement en matière plastique, par exemple en matériau polymère.

La figure 3 représente une variante de nervures, celles-ci référencées en 7 étant de forme trapézoîdales.

La figure 4 représente une autre variante où les nervures 8 sont triangulaires, mais avec un bord 8' arrondi.

La figure 5 représente une variante où les nervures 9 sont trapézoîdales mais avec des bords 9' et 9" arrondis.

Selon la figure 6, l'angle entre les deux bords des rainures est très ouvert, de l'ordre de 120°. Ceci permetj lors de la pose d'un câble avec des billes de ne pas multiplier exagérément le nombre des nervures. Effectivement, il est en pratique plus difficile d'utiliser des billes de diamètre supérieur à 1 ou 2 mm, d'où l'intérêt de limiter la profondeur des rainures et d'augmenter leur largeur.

## Revendications

1/ Câble pour fibres optiques destiné à étre posé par tirage dans une conduite, ledit câble comportant une âme (1) comportant au moins une fibre optique et étant pourvu d'une gaine extérieure (2) comportant une pluralité de nervures longitudinales (5), caractérisé en ce que lesdites nervures sont de forme triangulaire et sont de forme et dimensions permettant, lors de la pose du câble par tirage le long d'une conduite (4), d'intercaler des billes (6) entre le câble et la conduite, de telle sorte que le câble ne repose que sur les billes, chacune de celles-ci étant alors encastrée dans une desdites nervures.

2/ Câble pour fibres optiques selon la revendication 1, caractérisé en ce que lesdites nervures sont adaptées pour des billes d'un diamètre de l'ordre de 1 à plusieurs millimètres.

3/ Câble pour fibres optiques selon la revendication 2, caractérisé en ce que lesdites nervures sont adaptées pour des billes d'un diamètre de l'ordre de 1 à 2 millimètres.

4/ Câble pour fibres optiques selon la revendication 3, lesdites nervures étant adaptées pour des billes de l'ordre de 2 millimètres, caractérisé en ce qu'il est pourvu d'une douzaine de nervures.

5/ Câble selon l'une quelconque des revendications 1 â 4, caractérié en ce que l'angle (fig 6) entre les deux bords des nervures est très ouvert.

6/ Câble selon la revendication 5, caractérisé en ce que ledit angle est de l'ordre de 120 degrés.

## Patentansprüche

1. Kabel für Lichtleitfasern, das durch Einziehen in eine Rohrleitung verlegt werden soll, wobei das Kabel eine Seele (1) mit mindestens eine Lichtleitfaser aufweist und eine äußere Hülle (2) besitzt, die eine Vielzahl von Längsrippen (5) aufweist, dadurch gekennzeichnet, daß diese Rippen dreieckig sind und eine solche Form und solche Dimensionen aufweisen, daß sie beim Verlegen des Kabels durch Einziehen in eine Rohrleitung (4) das Einfügen von Kugeln (6) zwischen das Kabel und die Rohrleitung ermöglichen, so daß das Kabel nur auf den Kugeln liegt, wobei jede dieser Kugeln dann in eine dieser Rippen eingefügt ist.

2. Kabel für Lichtleitfasern nach Anspruch 1, dadurch gekennzeichnet, daß die Rippen an Kugeln eines Durchmessers von 1 bis zu mehreren Millimetern angepaßt sind.

3. Kabel für Lichtleitfasern nach Anspruch 2, dadurch gekennzeichnet, daü die Rippen an Kugeln eines Durchmessers von 1 bis 2 Millimetern angepaßt sind.

4. Kabel für Lichtleitfasern nach Anspruch 3, bei dem die Rippen für Kugeln eines Durchmessers von 2 Millimetern vorgesehen sind dadurch gekennzeichnet daß es ein Dutzend Rippen aufweist.

5. Kabel nach einem beliebigen der Ansprüche 1 bis 4, dadurch gekennzeichnet, daß der Winkel (Fig. 6) zwischen den beiden Rändern der Rippen weit offen ist.

6. Kabel nach Anspruch 5, dadurch gekennzeichnet. daß dieser Winkel etwa 120° beträgt.

## Claims

1. A cable for optical fibres destined to be posed in a pipe by drawing, said cable comprising a core (1) comprising at least one optical fibre and being supplied with an outer envelope (2) comprising a plurality of longitudinal ribs (5), characterized in that said ribs are of triangular form and are shaped and dimensioned such that they permit when the cable is posed by drawing along a pipe (4), to insert spheres (6) between the cable and the pipe, such that the cable only lies on the spheres, each of these spheres being thus imprisoned in one of said ribs.

2. A cable for optical fibres according to claim 1, characterized in that said ribs are adapted for spheres of a diameter of between 1 and several millimeters.

3. A cable for optical fibres according to claim 2, characterized in that said ribs are adapted for spheres of a diameter of about 1 to 2 millimeters.

4. A cable for optical fibres according to claim 3, said ribs being adapted for spheres of about 2 millimeters, characterized in that it is furnished with a dozen ribs.

5. A cable according to any one of claims 1 to 4, characterized in that the angle (fig. 6) between the two edges of the ribs is very open.

6. A cable according to claim 5, characterized in that said angle is about 120°.

# FIG_1

# FIG_2

# FIG_3

# FIG_4

# FIG_5

# FIG_6